(19) Europäisches Patentamt
European Patent Office
Office européen des brevets

(11) Veröffentlichungsnummer: **0 353 561 B1**

(12) # EUROPÄISCHE PATENTSCHRIFT

(45) Veröffentlichungstag der Patentschrift: **30.12.92**

(51) Int. Cl.$^5$: **A61M 1/16**, B01D 71/12, //C08B16/00

(21) Anmeldenummer: **89113426.4**

(22) Anmeldetag: **21.07.89**

(54) **Dialysemembranen aus cuoxamstabilen Celluloseestern und Carbamaten.**

(30) Priorität: **04.08.88 DE 3826468**

(43) Veröffentlichungstag der Anmeldung:
**07.02.90 Patentblatt 90/06**

(45) Bekanntmachung des Hinweises auf die Patenterteilung:
**30.12.92 Patentblatt 92/53**

(84) Benannte Vertragsstaaten:
**DE FR IT NL**

(56) Entgegenhaltungen:
**GB-A- 2 022 117**

(73) Patentinhaber: **Akzo N.V.**
**Postbus 9300 Velperweg 76**
**NL-6800 SB Arnhem(NL)**

(72) Erfinder: **Diamantoglou, Michael, Dr.**
**Kolpingstrasse 4**
**W-8765 Erlenbach/Main(DE)**

(74) Vertreter: **Fett, Günter**
**Akzo Patente GmbH Kasinostrasse 19 - 23**
**W-5600 Wuppertal 1(DE)**

EP 0 353 561 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die chemische Modifizierung von cellulosischen Dialysemembranen zur Verbesserung der Biocompatibilität.

Aus der DE-A-27 05 735 ist eine Dialysemembran für die Hämodialyse mit daran chemisch gebundenen antithrombogenen Verbindungen bekannt, wobei die Dialysemembran aus zwei oder mehreren Schichten einer aus Cuoxamcelluloselösungen regenerierten Cellulose besteht, die jeweils aus getrennt gespeisten Schlitzen einer Spinndüse erhalten worden ist, die antithrombogene Wirkstoffe chemisch gebunden enthält.

Die DE-A-27 48 858 vom 31.10.77 beschreibt die Herstellung von antithrombogenen Polymermaterialien, die nach folgender Verfahrensweise hergestellt werden:

- Umsetzung von reaktiven Polymeren mit synthetischen fibrinolytischen Verbindungen (kovalente Bindung)
- Behandlung von Anionenaustauschgruppen enthaltenden Polymeren mit einer synthetischen fibrinolytischen Verbindung (ionische Bindung)
- Behandlung von Polymerstoffen mit Lösungen von synthetischen fibrinolytischen Verbindungen (Adsorption).

Eine solche Membranmodifizierung scheidet aus, weil biokompatibilitätsverbessernde Verbindungen, die nur adsorptiv an das Polymer gebunden sind, während der Dialyse in die Blutbahn gelangen können.

US-A-3 475 410 vom 28.10.69 und die Veröffentlichung in Vol. XII Trans. Amer. Soc. Artif. Int. Organs, 1966, S. 139 - 150 beschreiben antithrombogene Cellulosemembranen, die durch Behandlung der Cellulose zunächst mit Ethylenimin und anschließend mit Heparin erhalten werden. Nach unseren Untersuchungen weisen aber mit Ethylaminogruppen modifizierte Membranen eine schlechtere Biokompatibilität als unmodifizierte auf.

Die japanischen Anmeldungen JP-A-57 162 701 und JP-A-57 162 702 beanspruchen ebenfalls antithrombogene Cellulosemembranen. Diese werden durch Aufpfropfen von Vinylmonomeren an Cellulose oder Cellulosederivate und nachfolgende Heparinisierung hergestellt. Neben der Aufpfropfreaktion findet aber bekanntlich auch eine Homopolymerisation statt. Obwohl zwischen Homopolymerisat und Cellulose keine feste Bindung besteht, kann dieses trotz intensiven Waschens nicht vollständig aus der Membran entfernt werden. Deshalb können während der Blutdialyse stets kleine Mengen des Homopolymerisats in die Blutbahn gelangen.

Die japanische Patentanmeldung JP-A-60-203 265 beschreibt hochmolekulare Celluloseprodukte zur Herstellung von medizinischen Instrumenten mit Anticoagulanteigenschaften. Es handelt sich dabei um Mischungen polykationischer und polyanionischer Cellulosederivate, die üblicherweise durch Vermischen entsprechender Polymerlösungen erhalten werden. Derartige wasserunlösliche Salze sind als Membranmaterialien ungeeignet, da stets die Gefahr besteht, daß sie durch Umsalzeffekte in eine wasserlösliche oder in Wasser stark quellbare Verbindung umgewandelt werden.

Es ist aber auch bereits in der DE-A-17 20 087 vorgeschlagen worden, dadurch daß das Polymermaterial der Membran mit einem Alkylhalogenid umgesetzt und danach das erhaltene Material mit einem Alkalisalz einer antithrombogenen Verbindung mit kationischem Rest (z.B. Heparin oder eine Heparinoidverbindung) umgesetzt wird, die Gefahr der Gerinnung des Blutes zu verringern. Zu den möglichen Alkylhalogeniden werden dabei auch Halogenalkyldialkylamine gerechnet. Cellulose und Celluloseacetat zählen zu den möglichen Polymeren.

Eine antithrombogene Wirkung dieser bekannten Dialysememhranen wird nur beobachtet, wenn der Substitutionsgrad der modifizierten Cellulose hoch ist, d.h. größer als mindestens 0,1, und in einem gesonderten Schritt eine Vorheparinisierung mit relativ hoher Heparinkonzentration (Lösungen mit 0,1 bis 1 Gew.%) durchgeführt wird.

Aus der DE-A-33 41 113 ist eine Dialysemembran in Form von Flachfolien, Schlauchfolien oder Hohlfäden aus regenerierter Cellulose bekannt, bei der mindestens an einer Membran-Oberfläche über an die Cellulose chemisch gebundene Brückenbildner polymere Säuren chemisch gebunden sind. Abgesehen davon, daß die Herstellung, obwohl sie in einer Nachbehandlung erfolgt, relativ aufwendig ist, ist die Wirksamkeit im wesentlichen auf eine Reduzierung der Leucopenie beschränkt. Wegen der großen Moleküle der polymeren Säuren erfolgt die Anbindung über die Brückenbildner lediglich an der Oberfläche der Membran.

Weiterhin ist auch aus der DE-A-34 38 531 eine Dialysemembran bekannt, bei der Isocyanatpräpolymere an die Cellulose gebunden werden. Die Wirksamkeit ist in ähnlicher Weise beschränkt, wie bei der vorstehend aufgeführten, mit polymeren Säuren modifizierten Cellulosemembran.

Aus der DE-A-35 24 596 ist bereits eine Dialysemembran mit verbesserter Biocompatibilität bekannt, die sich dadurch auszeichnet, daß der mittlere Substitutionsgrad einer modifizierten Cellulose 0,02 bis 0,07

beträgt. Geeignete durch Substitution modifizierte Cellulosen sind veresterte oder verätherte Cellulosen.Vorzugsweise enthält die bekannte Dialysemembran aus modifizierter Cellulose solche modifizierte Cellulose, die eine durch die Formel

Cellulose-R'-X-Y

wiedergegebene Struktur aufweist, wobei

X für -NR''- und/oder

$$\overset{+}{-NR''_2}-$$

und/oder -S-und/oder -SO- und/oder $-SO_2-$ und/oder

$$-\underset{\substack{\| \\ O}}{C}-\underset{\substack{| \\ R}}{N}-$$

und/oder -CO-O- und/oder -O-

Y für -R und/oder $-NR_2$ und/oder $-Si(OR'')_3$ und/oder $-SO_3H$ und/oder -COOH und/oder $-PO_3H_2$ und/oder

$$\overset{+}{-NHR_2}$$

bzw. deren Salze

R' für eine Alkylengruppe und/oder Cycloalkylengruppe und/oder Arylengruppe mit insgesamt 1 bis 25 C-Atomen

R'' für ein Wasserstoffatom oder R und

R für eine Alkylgruppe mit 1 bis 5 C-Atomen und/oder eine Cycloalkylgruppe und/oder Arylgruppe steht.

Diese bekannte Dialysemembran war bereits in der Lage, Blutgerinnung, Leucopenie und Komplementaktivierung in erheblichem Umfange zu reduzieren. Eine Adsorption von Beta-2-Mikroglobulin konnte jedoch in nennenswertem Umfange nicht erreicht werden.

Neben dem Umstand, daß Dialysemembranen aus synthetischen bzw. natürlichen Polymeren bei ihrem Einsatz in künstlichen Nieren sehr leicht eine Gerinnung des Blutes hervorrufen können, die durch entsprechende medikamentöse Behandlung weitgehend verhindert wird, tritt bei Dialysemembranen aus regenerierter Cellulose häufig bei der Behandlung eines Nierenkranken mit Dialysatoren mit Cellulose-Membranen in der ersten Zeit der Dialysebehandlung ein vorübergehender Leukozytenabfall auf. Dieser Effekt wird als Leukopenie bezeichnet.

Leukopenie ist eine Erniedrigung der Leukozytenzahl (weiße Blutkörper) im Blutkreislauf. Die Zahl der weißen Blutkörper beim Menschen beträgt ca. 4000 bis 12000 Zellen/$mm^3$.

Die Leukopenie bei der Dialyse ist am stärksten ausgeprägt 15 bis 20 Min. nach Beginn, wobei die Neutrophilen (das sind die mit neutralen oder gleichzeitig mit sauren und basischen Farbstoffen anfärbbaren Leukozyten) fast vollständig verschwinden können. Danach erholt sich die Zahl der Leukozyten innerhalb etwa einer Stunde wieder auf fast den Ausgangswert oder übersteigt diesen.

Wird nach Erholung der Leukozyten ein neuer Dialysator angeschlossen, tritt wieder Leukopenie im gleichen Ausmaß ein.

Cellulose-Membranen verursachen eine ausgeprägte Leukopenie. Auch wenn die klinische Bedeutung der Leukopenie wissenschaftlich nicht geklärt ist, besteht doch der Wunsch nach einer Dialysemembran für die Hämodialyse, die den Effekt der Leukopenie nicht zeigt, ohne daß dadurch die anderen sehr erwünschten Eigenschaften von Dialysemembranen aus regenerierter Cellulose beeinträchtigt werden.

Bei der Hämodialyse mittels Membranen aus regenerierter Cellulose hat man neben der Leukopenie auch eine deutliche Komplement-Aktivierung festgestellt. Das Komplement-System innerhalb des Blutserums ist ein komplexes, aus vielen Komponenten bestehendes Plasmaenzym-System, das auf verschiedene Weise der Abwehr von Schädigungen durch eindringende fremde Zellen (Bakterien u.a.) dient. Wenn

Antikörper gegen den eindringenden Organismus vorhanden sind, kann komplementspezifisch durch den Komplex der Antikörper mit antigenen Strukturen der Fremdzellen aktiviert werden, anderenfalls erfolgt auf einem Alternativ-Weg durch besondere Oberflächenmerkmale der Fremdzellen die Komplement-Aktivierung. Das Komplement-System beruht auf einer Vielzahl von Plasma-Proteinen. Nach Aktivierung reagieren diese Proteine spezifisch in einer bestimmten Reihenfolge miteinander und am Ende wird ein zellschädigender Komplex gebildet, der die Fremdzelle zerstört.

Aus einzelnen Komponenten werden Peptide freigesetzt, die Entzündungserscheinungen auslösen und gelegentlich auch unerwünschte pathologische Folgen für den Organismus haben können. Es wird angenommen, daß die Aktivierung bei Hämodialysemembranen aus regenerierter Cellulose über den alternativen Weg erfolgt. Objektiv festgestellt werden diese Komplement-Aktivierungen durch eine Bestimmung der Komplement-Fragmente C3a und C5a.

In diesem Zusammenhang wird auf folgende Arbeiten hingewiesen: D.E. Chenoweth et al., Kidney International Vol. 24, Seite 764 ff, 1983, und D.E. Chenoweth, Asaio-Journal Vol. 7, Seite 44 ff, 1984.

Im Rahmen der vorliegenden Erfindung wurde die Komplement-Aktivierung anhand der Fragmente C5a beurteilt. Dazu wurden in vitro 300 ml heparinisiertes Blutplasma über einen Zeitraum von 4 Std. mit einem Plasmafluß von 100 ml/min durch einen Dialysator mit 1 $m^2$ effektiver Austauschfläche rezirkuliert. In dem Plasma wurden die C5a-Fragmente mit Hilfe der RIA-Methode (Amersham-Test) bestimmt. Die relative Komplement-Aktivierung für den jeweiligen Meßzeitpunkt wurde durch Bildung des Verhältnisses aus der Konzentration zum Zeitpunkt der Probenahme und dem Anfangswert in Prozent errechnet. Zur Bewertung wurde der Meßwert nach 4 Std. Rezirkulationszeit herangezogen. Flachmembranen werden mit heparinisiertem Blutplasma 3 Stunden inkubiert und anschließend die C5a-Fragmente bestimmt.

Der Durchschnittspolymerisationsgrad DP wurde in einer Cuen-Lösung nach DIN 54270 bestimmt. Der Carbamatgehalt und/oder Veresterungsgrad wurden anhand der Analysenergebnisse bestimmt, die für die Substituenten bekannt und typisch sind, beispielsweise Stickstoff nach Kjeldahl, Schwefel nach Schöniger oder Phosphor nach der Molybdatmethode, gegebenenfalls aus der Differenz vor und nach einer Verseifung.

Aufgabe der vorliegenden Erfindung war es, biocompatible Dialysemembranen aus regenerierter Cellulose in Form von Flachfolien, Schlauchfolien oder Hohlfäden zur Verfügung zu stellen, die bei einem möglichst geringen Substitutionsgrad von modifizierten Cellulosen gute Biocompatibilität aufweisen und bei denen die Cellulose im Cuoxamprozeß regeneriert wurde. Celluloseester und Cellulosecarbamate sind nicht ohne weiteres im Cuoxamprozeß zu verarbeiten, weil sie einerseits bei höheren Substitutionsgraden unlöslich sind und andererseits im alkalischen Medium der Cuoxamlösung leicht verseifen.

Überraschenderweise wurde nunmehr festgestellt, daß es gelingt, Cellulose aus Cuoxamlösung zu regenerieren, die zu einem gewissen Anteil ausgewählte Celluloseester enthält, ohne daß die Celluloseester in einem wesentlichen Anteil verseifen, wenn sie dadurch gekennzeichnet sind, daß die Acylgruppe eine oder mehrere ggf. substituierte Kohlenstoffketten mit 10 - 36 Kohlenstoffatomen oder einen wenigstens einen aromatischen und/oder heterocyclischen, ggf. substituierten Ring enthaltenden Rest darstellt.

Unter dem mittleren Substitutionsgrad der durch Substitution modifizierten Cellulose soll im Rahmen der vorliegenden Erfindung die mittlere Anzahl der Substituenten pro 1 Glucoseanhydrideinheit der die Membran bildenden Cellulose verstanden werden.

Die Einstellung des gewünschten mittleren Substitutionsgrades kann durch die Mengenverhältnisse bei der Substitution oder durch Vermischung von unterschiedlich substituierten Cellulosen bzw. substituierter mit nichtsubstituierter Cellulose erfolgen.

Vorzugsweise beträgt der Substitutionsgrad der Cellulose in der Dialysemembran 0,01 bis 0,5. Besonders bevorzugt ist ein Substitutionsgrad von 0,01 bis 0,02.

Die Aufgabe wird auch gelöst durch eine Dialysemembran für die Hämodialyse aus aus Cuoxamlösungen regenerierter, durch Substitution modifizierter Cellulose in Form von Flachfolien, Schlauchfolien oder Hohlfäden, wenn die Substituenten Carbamatgruppen sind, deren Carbamoylrest eine oder mehrere ggf. sübstituierte Kohlenstoffketten mit 2 - 36 Kohlenstoffatomen oder einen wenigstens einen aromatischen und/oder heterocyclischen, ggf. substituierten Ring enthaltenden Rest darstellt.

Vorzugsweise beträgt hier der Substitutionsgrad in der Dialysemembran 0,01 bis 0,9. Besonders bevorzugt ist ein Substitutionsgrad von 0,01 bis 0,6.

In besonderer Ausgestaltung der Erfindung ist die Kohlenstoffkette der Substituenten durch Heteroatome wie O, S, N, P, Si sowie -CO-, -CONR-, -COO-, -SO- und/oder $-SO_2$-Gruppen unterbrochen.

Figur 1 ist das IR-Spektrum der nach Vergleichsbeispiel 1 hergestellten Dialysemembran.

Figur 2 ist das IR-Spektrum der nach Beispiel 2 hergestellten Dialysemembran.

Die nachfolgenden Beispiele dienen der weiteren Erläuterung der vorliegenden Erfindung.

Vergleichsbeispiel 1

Durch Umsetzung von Linters-Cellulose mit Propionsäureanhydrid wurde nach bekannter Verfahrensweise Cellulosepropionat mit einem Acylierungsgrad von DS = 0,62 hergestellt. Aus diesem Material wurde nach üblicher Arbeitsweise eine Cellulose-Cuoxamlösung mit 6 % Cellulosederivat-Gehalt hergestellt und zu Flachmembranen verarbeitet. Diese wurden anschließend auf Propionsäure-Gehalt und Komplementaktivierung untersucht.

Propionsäure war weder chemisch noch IR-spektroskopisch (IR-Spektrum Fig. 1) nachweisbar. Dies deutet auf eine vollständige Verseifung des Cellulosepropionates im Cuoxam hin. Die $C_{5a}$-Aktivierung lag im Bereich der unmodifizierten Cellulosemembran.

Vergleichsbeispiel 2

Aus nach bekannter Verfahrensweise hergestelltem Cellulosehexansäureester wurde eine Cellulose-Cuoxamlösung mit 6 % Ester-Gehalt hergestellt, zu Flachmembranen verarbeitet und untersucht.

Die Membranen wiesen einen Acylierungsgrad von DS = 0,05 auf. Die $C_{5a}$-Reduktion betrug gegenüber der unmodifizierten Membran 30 %.

Beispiel 1

Aus nach bekannter Verfahrensweise hergestelltem Cellulosedodecenylsuccinat wurde eine Cellulose-Cuoxamlösung mit 6 % Ester-Gehalt hergestellt, zu Flachmembranen verarbeitet und untersucht.

Die auf diese Weise hergestellten Membranen wiesen einen Acylierungsgrad von DS = 0,018 auf. Die $C_{5a}$-Reduktion gegenüber der unmodifizierten Membran betrug 96 %.

Beispiel 2

Aus nach bekannter Verfahrensweise hergestelltem Cellulosephenylcarbamat wurde eine Cellulose-Cuoxamlösung mit 6 % Carbamat-Gehalt hergestellt, zu Flachmembranen verarbeitet und untersucht.

Die auf diese Weise hergestellten Membranen wiesen einen Carbamat-Gehalt von DS = 0,16 auf. Im IR-Spektrum (Fig. 2) sind die entsprechenden Carbamat-Banden bei 1714, 1602 und 1547 $cm^{-1}$ deutlich erkennbar. Die $C_{5a}$-Reduktion betrug gegenüber der unmodifizierten Membran 88 %.

Beispiele 3 - 7

Aus nach bekannter Verfahrensweise synthetisiertem Cellulosepalmitat, -stearat, -oleat, -butylcarbamat und -cyclohexylcarbamat wurden Cellulose-Cuoxamlösungen mit 6% Polymergehalt hergestellt, zu Flachmembranen verarbeitet und deren $C_{5a}$-Aktivierung ermittelt.
Die Ergebnisse sind in der Tabelle 1 zusammengestellt.

Tabelle 1

| Beispiel Nr. | Cellulose-Derivat | Substitutionsgrad | $C_{5a}$-Reduktion [%] |
|---|---|---|---|
| 3 | Palmitat | 0,011 | 65 |
| 4 | Stearat | 0,013 | 60 |
| 5 | Oleat | 0,014 | 70 |
| 6 | Butylcarbamat | 0,015 | 79 |
| 7 | Cyclohexylcarbamat | 0,012 | 85 |

**Patentansprüche**

1. Dialysemembran für die Hämodialyse aus aus Cuoxamlösungen regenerierter, durch Substitution modifizierter Cellulose in Form von Flachfolien, Schlauchfolien oder Hohlfäden, wobei die Substituenten Estergruppen sind, dadurch gekennzeichnet, daß die Acylgruppe eine oder mehrere ggf. substituierte Kohlenstoffketten mit 10 - 36 Kohlenstoffatomen oder einen wenigstens einen aromatischen und/oder

heterocyclischen, ggf. substituierten Ring enthaltenden Rest darstellt.

**2.** Dialysemembran für die Hämodialyse aus aus Cuoxamlösungen regenerierter, durch Substitution modifizierter Cellulose in Form von Flachfolien, Schlauchfolien oder Hohlfäden, dadurch gekennzeichnet, daß die Substituenten Carbamatgruppen sind, deren Carbamoylrest eine oder mehrere ggf. substituierte Kohlenstoffketten mit 2 - 36 Kohlenstoffatomen oder einen wenigstens einen aromatischen und/oder heterocyclischen, ggf. substituierten Ring enthaltenden Rest darstellt.

**3.** Dialysemembran nach Anspruch 1 oder 2, dadurch gekennzeichnet, daß die Kohlenstoffkette der Substituenten durch Heteroatome wie O, S, N, P, Si sowie -CO-, -CONR-, -COO-, -SO- und/oder -$SO_2$-Gruppen unterbrochen ist.

**4.** Dialysemembran nach Anspruch 1 oder nach den Ansprüchen 1 und 3, dadurch gekennzeichnet, daß der Substitutionsgrad der Cellulose in der Dialysemembran 0,01 bis 0,5 beträgt.

**5.** Dialysemembran nach Anspruch 4, dadurch gekennzeichnet, daß der Substitutionsgrad der Cellulose in der Dialysemembran 0,01 bis 0,02 beträgt.

**6.** Dialysemembran nach Anspruch 2 oder nach den Ansprüchen 2 und 3, dadurch gekennzeichnet, daß der Substitutionsgrad der Cellulose in der Dialysemembran 0,01 bis 0,9 beträgt.

**7.** Dialysemembran nach Anspruch 6, dadurch gekennzeichnet, daß der Substitutionsgrad der Cellulose in der Dialysemembran 0,01 bis 0,6 beträgt.

## Claims

**1.** Dialysis membrane for haemodialysis consisting of cellulose in the form of flat films, tubular films or hollow threads which has been regenerated from cuoxam solutions and modified by substitution, the substituents being ester groups, characterised in that the acyl group constitutes one or more optionally substituted carbon chains having 10 to 36 carbon atoms or a group containing at least one aromatic and/or heterocyclic, optionally substituted ring.

**2.** Dialysis membrane for haemodialysis consisting of cellulose in the form of flat films, tubular films or hollow threads which has been regenerated from cuoxam solutions and modified by substitution, characterized in that the substituents are carbamate groups whose carbamoyl residue constitutes one or more optionally substituted carbon chains having 2 to 36 carbon atoms or a group containing at least one aromatic and/or heterocyclic, optionally substituted ring.

**3.** Dialysis membrane according to Claim 1 or Claim 2, characterized in that the carbon chain of the substituents is interrupted by hetero atoms such as O, S, N, P or Si and CO, CONR, COO, SO and/or $SO_2$ groups.

**4.** Dialysis membrane according to Claim 1 or according to Claims 1 and 3, characterised in that the degree of substitution of the cellulose in the dialysis membrane is from 0.01 to 0.5.

**5.** Dialysis membrane according to Claim 4, characterised in that the degree of substitution of the cellulose in the dialysis membrane is from 0.01 to 0.02.

**6.** Dialysis membrane according to Claim 2 or according to Claims 2 and 3, characterised in that the degree of substitution of the cellulose in the dialysis membrane is from 0.01 to 0.9.

**7.** Dialysis membrane according to Claim 6, characterised in that the degree of substitution of the cellulose in the dialysis membrane is from 0.01 to 0.6.

## Revendications

**1.** Membrane de dialyse pour l'hémodialyse, à base de cellulose régénérée à partir de solution au Cuoxame et modifiée par substitution, sous forme de feuilles planes, de feuilles tubulaires ou de fibres

creuses, les substituants étant des groupes ester, caractérisée en ce que le groupe acyle représente une ou plusieurs chaînes carbonées, éventuellement substituées et comportant de 10 à 36 atomes de carbone, ou un reste contenant au moins un noyau aromatique et/ou hétérocyclique, éventuellement substitué.

2. Membrane de dialyse pour l'hémodialyse, à base de cellulose régénérée à partir de solution au Cuoxame et modifiée par substitution, sous forme de feuilles planes, de feuilles tubulaires ou de fibres creuses, caractérisée en ce que les substituants sont des groupes carbamates dont le reste carbamoyle représente une ou plusieurs chaînes carbonées, éventuellement substituées et comportant de 2 à 36 atomes de carbone, ou un reste contenant au moins un noyau aromatique et/ou hétérocyclique éventuellement substitué.

3. Membrane de dialyse selon la revendication 1 ou 2, caractérisée en ce que les chaînes carbonées des substituants sont interrompues par des hétéroatomes tels que O, S, N, P, Si, ainsi que par des groupes -CO-, -CONR-, -COO-, -SO-et/ou $-SO_2-$.

4. Membrane de dialyse selon la revendication 1 ou les revendications 1 et 3, caractérisée en ce que le degré de substitution de la cellulose, dans cette membrane de dialyse, vaut de 0,01 à 0,5.

5. Membrane de dialyse selon la revendication 4, caractérisée en ce que le degré de substitution de la cellulose, dans cette membrane de dialyse, vaut de 0,01 à 0,02.

6. Membrane de dialyse selon la revendication 2 ou les revendications 2 et 3 caractérisée en ce que le degré de substitution de la cellulose, dans cette membrane de dialyse, vaut de 0,01 à 0,9.

7. Membrane de dialyse selon la revendication 6, caractérisée en ce que le degré de substitution de la cellulose, dans cette membrane de dialyse, vaut de 0,01 à 0,6.

Figur 1

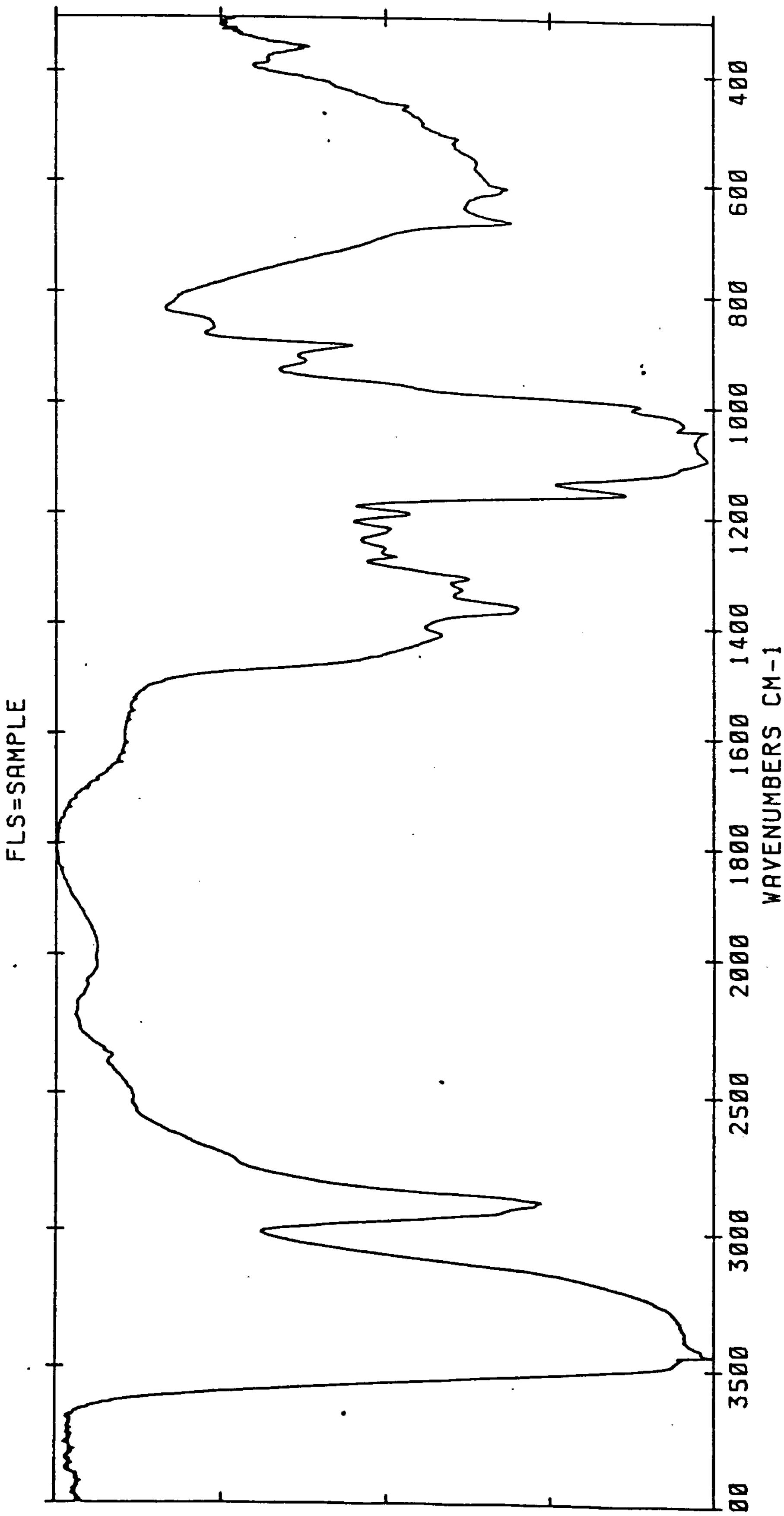
FLS=SAMPLE
WAVENUMBERS CM-1
400
600
800
1000
1200
1400
1600
1800
2000
2500
3000
3500
00

Figur 2

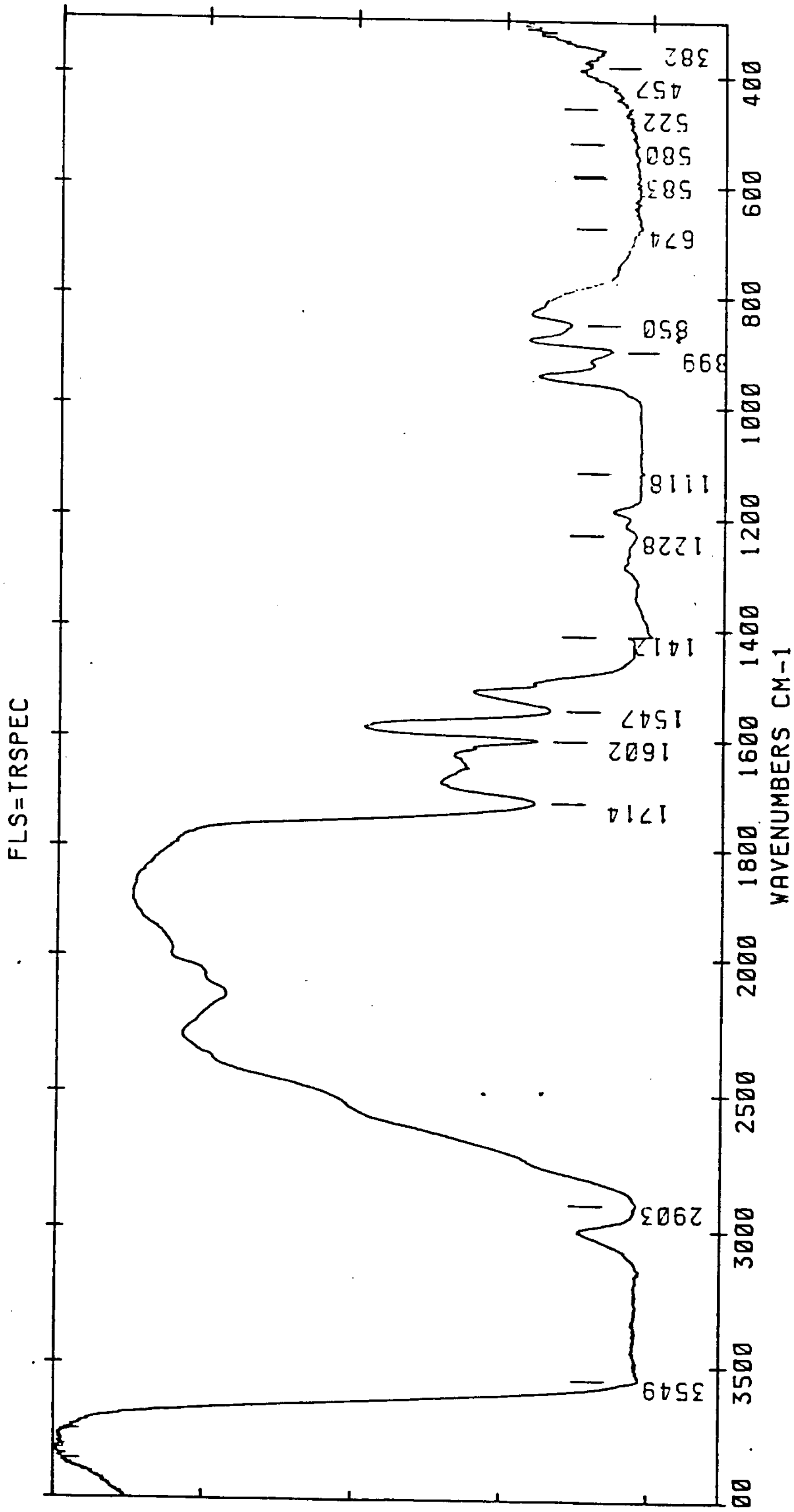
FLS=TRSPEC
382
457
522
580
583
674
850
899
1118
1228
1412
1547
1602
1714
2903
3549
400
600
800
1000
1200
1400
1600
1800
2000
2500
3000
3500
00
WAVENUMBERS CM-1